# EUROPEAN PATENT APPLICATION

(11) **EP 3 902 144 A1**
(43) Date of publication of application: **27.10.2021**
(21) Application number: 19899772.8
(22) Date of filing: 18.12.2019
(51) Int. Cl.: H04B 1/04

(54) **MULTI-CHANNEL TRANSMITTER RADIO FREQUENCY FRONT-END STRUCTURE, TERMINAL, AND WIRELESS COMMUNICATION DEVICE**

(30) Priority: 19.12.2018 CN 201811559812
(71) Applicant: Tianjin University, Tianjin 300072 (CN); Rofs Microsystem (Tianjin) Co., Ltd, Tianjin 300457 (CN)
(72) Inventor: PANG, Wei, Tianjin 300072 (CN); CAI, Hualin, Tianjin 300072 (CN)
(74) Representative: Bandpay & Greuter
(86) International application number: PCT/CN2019/126240
(87) International publication number: WO 2020/125664

(57) **Abstract**

The present disclosure provides a multi-channel transmitter radio frequency front end structure, a terminal, and wireless communication equipment. The multi-channel transmitter radio frequency front end structure includes two power amplifiers, a radio frequency duplexer, a resonant network and an antenna terminal, the radio frequency duplexer is connected between the two power amplifiers and the antenna terminal, the resonant network is a series resonant network and is connected between the two power amplifiers and the antenna terminal, and the equivalent circuit of the series resonant network is that a grounding capacitor connected in series between two inductors. In the present disclosure, through passive resonance, equivalent low impedance is generated in the frequency bands of other channels, which can achieve the effect of eliminating leaked signals, thus improving the isolation. In addition, by setting the parameters of a passive resonant network, negative capacitance can be generated in a specific frequency band, so that parasitic capacitance can be eliminated, and matching inductance can be eliminated as a result.

## Description

### Technical Field

The present disclosure relates to the field of semiconductors and micro electro mechanical systems, in particular to a multi-channel transmitter radio frequency front end structure, a terminal, and wireless communication equipment.

### Background Art

With the increasing number of communication frequency bands and the application of carrier aggregation, separate multi-mode and multi-frequency-band can no longer meet the requirements of mobile phones for radio frequency devices. The radio frequency devices begin to gradually develop into multi-channel and multi-mode radio frequency modules. A PAMiD (Power Amplifier Modules integrated Duplexer) module, that is, multiple PA modules and filters are packaged into one module together, which can reduce the performance degradation caused by the separate packaging of multiple modules. At the same time, the cost is also greatly reduced due to the reduction of the total packaging steps. Therefore, this kind of radio frequency solution is more and more widely used in terminal equipment.

With the gradual development of radio frequency communication systems, the performance requirements for radio frequency front ends are getting higher and higher. Multiple PAs in the same module will cause a mutual interference problem, which leads to the deterioration of multi-channel isolation and greatly affects the performance of the communication systems. Therefore, how to improve the interference among multiple channels and multiple frequency bands to achieve the anti-interference performance of the PAMiD module is a technical problem that needs to be solved urgently by those skilled in the art at present.

### Summary of the Invention

In view of this, the present disclosure provides a multi-channel transmitter radio frequency front end structure, a terminal, and wireless communication equipment. Through passive resonance, equivalent low impedance is generated in the frequency bands of other channels, which can achieve the effect of eliminating leaked signals, thus improving the isolation. In addition, by setting the parameters of a passive resonant network, negative capacitance can be generated in a specific frequency band, so that parasitic capacitance can be eliminated, and matching inductance can be eliminated as a result.

In a first aspect, a multi-channel transmitter radio frequency front end structure is provided, including:
two power amplifiers, a radio frequency duplexer, a resonant network and an antenna terminal, wherein the radio frequency duplexer is connected between the two power amplifiers and the antenna terminal, the resonant network is a series resonant network and is connected between the two power amplifiers and the antenna terminal, and the equivalent circuit of the series resonant network is that a grounding capacitor connected in series between two inductors.

The working principle of the circuit diagram is as follows:
when a certain radio frequency channel of the power amplifier transmits power, a radio frequency signal is transferred to the radio frequency duplexer by a certain radio frequency channel and then is transmitted by the antenna, while weak radio frequency signals leaking to other radio frequency channels are absorbed by the resonant network that is conducted to the ground, so that the isolation between channels can be effectively improved. At this time, the two input terminals, that is, the antenna terminal and the radio frequency duplexer, need matching inductance due to the introduction of parasitic capacitance. By adopting the resonant network of the present disclosure, the parasitic capacitance can also be canceled, thereby eliminating additional matching inductance. Therefore, when the radio frequency signal of a certain channel of the multi-channel power amplifier leaks to another channel, it can flow to the ground through the low impedance generated by the resonant network at specific frequency, thereby improving the suppression effect of signal leakage and improving the isolation.

Further, the series resonance network is connected between the two power amplifiers and the radio frequency duplexer.

Further, the series resonance network is connected between the radio frequency duplexer and the antenna terminal.

Further, one group of the series resonant networks is connected between the two power amplifiers and the radio frequency duplexer, and the other group is connected between the radio frequency duplexer and the antenna terminal.

In a second aspect, another multi-channel transmitter radio frequency front end structure is provided, including:
two power amplifiers, a radio frequency duplexer, a resonant network and an antenna terminal, wherein the radio frequency duplexer is connected between the two power amplifiers and the antenna terminal, the resonant network is a parallel resonant network and is connected in series between the two power amplifiers and the radio frequency duplexer, and the equivalent circuit of the parallel resonant network is that a capacitor is connected in parallel with an inductor.

The working principle of the circuit diagram is as follows: when a certain radio frequency channel of the power amplifier transmits power, a radio frequency signal is transferred to the radio frequency duplexer by a certain radio frequency channel and then is transmitted by the antenna, while weak radio frequency signals leaking to other radio frequency channels generate high impedance through parallel resonance to suppress the signals at the resonance frequency points of various branches, thereby improving the suppression effect of signal leakage and improving the isolation.

Further, the radio frequency duplexer (Duplexer) comprises two groups of parallel filters, the filter comprises four series resonators and three parallel resonators, and the two ends of the parallel resonator are respectively connected in parallel between the connection point group of two series resonators and a ground terminal.

In a third aspect, a multi-channel terminal is provided, including:
a baseband unit, configured to process a received I/Q signal and provide the I/Q signal for a transmitting path, wherein the baseband unit supports GSM, TD-SCDMA, FDD-LTE and TDD-LTE systems; and
a radio frequency unit, including a multi-channel transmitter radio frequency front end structure, and configured to support the reception and transmission of radio frequency signals in various frequency bands of GSM, TD-SCDMA, FDD-LTE and TDD-LTE systems.

Further, the radio frequency unit specifically includes:
a radio frequency transceiver chip, configured to support the reception and transmission of radio frequency signals in various frequency bands of GSM, TD-SCDMA and LTE systems;
a power amplifier (PA), configured to amplify GSM radio frequency signals, TD-SCDMA radio frequency signals, FDD-LTE radio frequency signals and TDD-LTE radio frequency signals;
a resonant network (SW), configured to guide leakage signals of the power amplifier (PA) to the ground at specific frequency; and
a radio frequency duplexer (Duplexer), configured to isolate transmitting paths and receiving paths of various frequency bands of the GSM radio frequency signals, the TD-SCDMA radio frequency signals, the FDD-LTE radio frequency signals and the TDD-LTE radio frequency signals.

In a fourth aspect, wireless communication equipment including the above-mentioned multi-channel terminal is provided.

Therefore, according to the multi-channel transmitter radio frequency front end structure provided in the present disclosure, when the radio frequency signal of a certain channel of the multi-channel power amplifier leaks to another channel, it can flow to the ground through the low impedance generated by the resonant network at specific frequency, thereby improving the suppression effect of signal leakage and improving the channel isolation. At the same time, the two input terminals, that is, the antenna terminal and the radio frequency duplexer, need matching inductance due to the introduction of parasitic capacitance. By adopting the resonant network of the present disclosure, the parasitic capacitance can also be canceled, thereby eliminating additional matching inductance.

### Brief Description of the Drawings

The drawings are used for providing a better understanding the present disclosure, but do not constitute an improper limitation of the present disclosure, wherein:
Fig. 1 shows a dual-channel transmitter radio frequency front end structure according to embodiment 1 of the present disclosure.
Fig. 2 shows a dual-channel transmitter radio frequency front end structure according to embodiment 2 of the present disclosure.
Fig. 3 shows a dual-channel transmitter radio frequency front end structure according to embodiment 3 of the present disclosure.
Fig. 4 shows a dual-channel transmitter radio frequency front end structure according to embodiment 4 of the present disclosure.
Fig. 5 shows an n-channel transmitter radio frequency front end structure according to embodiment 5 of the present disclosure.
Fig. 6 shows a characteristic curve of a resonant network in the dual-channel transmitter radio frequency front-end structure.
Fig. 7 shows a filter matching method in the prior art.
Fig. 8 shows a filter matching method in embodiment 1 of the present disclosure.
Fig. 9 shows characteristic curves of the filter matching method in the prior art and embodiment 1 of the present disclosure.
Fig. 10 shows filter transmission curves of a Duplexer+PA structure of B39+41N and an LC structure of the present disclosure.
Fig. 11 shows filter transmission curves of the Duplexer+PA structure of B39 N and the LC structure of the present disclosure.
Fig. 12 shows filter transmission curves of the Duplexer+PA structure of B41 N and the LC structure of the present disclosure.
Fig. 13 shows two-channel isolation curves of the Duplexer+PA structure of B39 +41N and the LC structure of the present disclosure.
Fig. 14 shows suppression curves of setting the resonant frequency of the Duplexer+PA structure of B39 +41N and the LC structure of the present disclosure to a GPS frequency band to improve specific frequency.

### Detailed Description of the Embodiments

In order to enable those skilled in the art to better understand the technical solutions in the present disclosure, a clear and complete description of the technical solutions in the embodiments of the present disclosure will be given below, in combination with the drawings in the embodiments of the present disclosure. Apparently, the embodiments described below are merely a part, but not all, of the embodiments of the present disclosure. All of other embodiments, obtained by those of ordinary skill in the art based on the embodiments of the present disclosure without any creative effort, should fall into the protection scope of the present disclosure.

### Embodiment 1

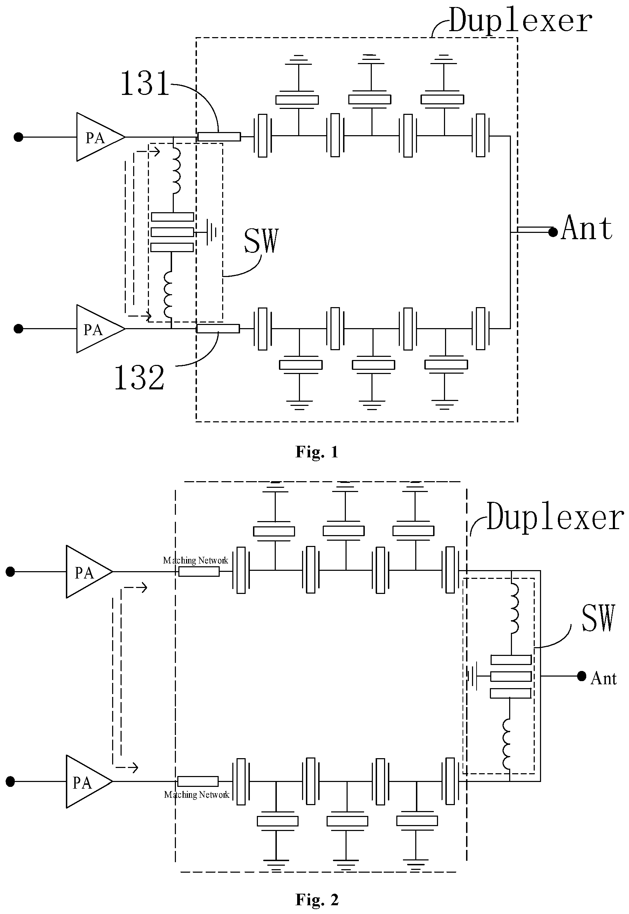

Fig. 1 shows a radio frequency front end structure of a dual-channel transmitter in embodiment 1 of the present disclosure. As shown in Fig. 1, the radio frequency front end structure of the dual-channel transmitter includes:
two power amplifiers (PA), a radio frequency duplexer (Duplexer), a resonant network (SW) and an antenna terminal (Ant), wherein the radio frequency duplexer (Duplexer) is connected between the two power amplifiers (PA) and the antenna terminal (Ant), the resonant network (SW) is a series resonant network and is connected between the two power amplifiers (PA) and the radio frequency duplexer (Duplexer), and the equivalent circuit of the series resonant network is that a grounding capacitor connected in series between two inductors.

Specifically, the two ends of the series resonant network are respectively connected between two power amplifiers (PA) and the radio frequency duplexer (Duplexer), the grounding capacitor can be realized by a substrate, a PCB or a discrete device, the two inductors form a series resonator, and the two branches can improve the suppression and isolation of two channels respectively. The radio frequency duplexer (Duplexer) comprises two groups of parallel filters, the filter comprises four series resonators and three parallel resonators, and the two ends of the parallel resonator are respectively connected in parallel between the connection point group of two series resonators and a ground terminal.

In addition, in the dual-channel transmitter radio frequency front end, a matching circuit is connected in series between the two power amplifiers and the radio frequency duplexer, such as the matching circuit 131 and the matching circuit 132 shown in the figure (the matching circuit is marked as Maching Network in other figures). The matching circuit can be a T-type, a Pi-type or an L-type passive device, which functions to perform impedance matching between the power amplifier and the radio frequency duplexer, because for the power amplifier, it has optimal impedance, but for the radio frequency duplexer, it cannot provide this optimal impedance in general, so a matching network needs to be added in the middle to ensure that the power amplifier works in the best state, and that the signal can be effectively transmitted to the next stage.

### Embodiment 2

Fig. 2 shows a dual-channel transmitter radio frequency front end structure in embodiment 2 of the present disclosure. As shown in Fig. 2, the radio frequency front end structure of the dual-channel transmitter includes:
two power amplifiers (PA), a radio frequency duplexer (Duplexer), a resonant network (SW) and an antenna terminal (Ant), wherein the radio frequency duplexer (Duplexer) is connected between the two power amplifiers (PA) and the antenna terminal (Ant), the resonant network (SW) is a series resonant network and is connected between the radio frequency duplexer (Duplexer) and the antenna terminal (Ant), and the equivalent circuit of the series resonant network is that a grounding capacitor connected in series between two inductors.

Specifically, the two ends of the series resonant network are respectively connected between the radio frequency duplexer (Duplexer) and the antenna terminal (Ant), the grounding capacitor can be realized by a substrate, a PCB or a discrete device, the two inductors form a series resonator, and the two branches can improve the suppression and isolation of two channels respectively. The radio frequency duplexer (Duplexer) comprises two groups of parallel filters, the filter comprises four series resonators and three parallel resonators, and the two ends of the parallel resonator are respectively connected in parallel between the connection point group of two series resonators and a ground terminal.

### Embodiment 3

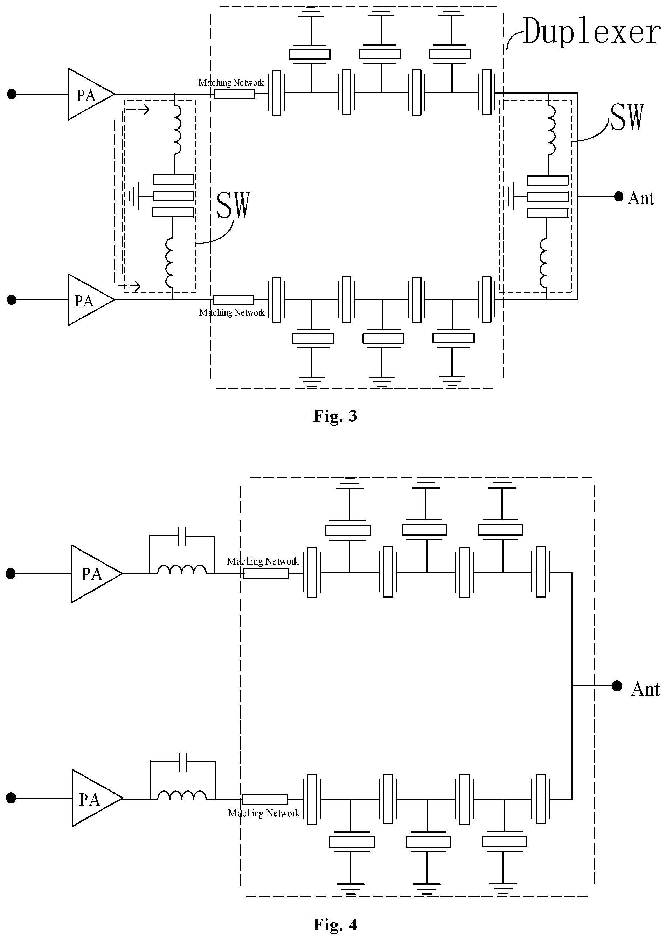

Fig. 3 shows a dual-channel transmitter radio frequency front end structure in embodiment 3 of the present disclosure. As shown in Fig. 3, the radio frequency front end structure of the dual-channel transmitter includes:
two power amplifiers (PA), a radio frequency duplexer (Duplexer), a resonant network (SW) and an antenna terminal (Ant), wherein the radio frequency duplexer (Duplexer) is connected between the two power amplifiers (PA) and the antenna terminal (Ant), the resonant network (SW) comprises two groups of series resonant networks, one of the two groups of series resonant networks is connected between the two power amplifiers (PA) and the radio frequency duplexer (Duplexer), and the other of the two groups of series resonant networks is connected between the radio frequency duplexer (Duplexer) and the antenna terminal (Ant), and the equivalent circuit of the series resonant network is that a grounding capacitor connected in series between two inductors.

Specifically, for the two groups of series resonant networks, the two ends of one group of series resonant networks are respectively connected between the two power amplifiers (PA) and the radio frequency duplexer (Duplexer), and the two ends of the other group of series resonant networks are respectively connected between the radio frequency duplexer (Duplexer) and the antenna terminal (Ant). The grounding capacitor can be realized by a substrate, a PCB or a discrete device, the two inductors form a series resonator, and the two branches can improve the suppression and isolation of two channels respectively. The radio frequency duplexer (Duplexer) comprises two groups of parallel filters, the filter comprises four series resonators and three parallel resonators, and the two ends of the parallel resonator are respectively connected in parallel between the connection point group of two series resonators and a ground terminal.

### Embodiment 4

Fig. 4 shows a dual-channel transmitter radio frequency front end structure in embodiment 4 of the present disclosure. As shown in Fig. 4, the radio frequency front end structure of the dual-channel transmitter includes:
two power amplifiers (PA), a radio frequency duplexer (Duplexer), a resonant network (SW) and an antenna terminal (Ant), wherein the radio frequency duplexer (Duplexer) is connected between the two power amplifiers (PA) and the antenna terminal (Ant), the resonant network (SW) is a parallel resonant network and is connected in series between the two power amplifiers (PA) and the radio frequency duplexer (Duplexer), and the equivalent circuit of the parallel resonant network is that a capacitor is connected in parallel with an inductor.

Specifically, the two ends of the series resonant network are respectively connected between the power amplifiers (PA) and the radio frequency duplexer (Duplexer), the radio frequency duplexer (Duplexer) comprises two groups of parallel filters, the filter comprises four series resonators and three parallel resonators, and the two ends of the parallel resonator are respectively connected in parallel between the connection point group of two series resonators and a ground terminal.

### Embodiment 5

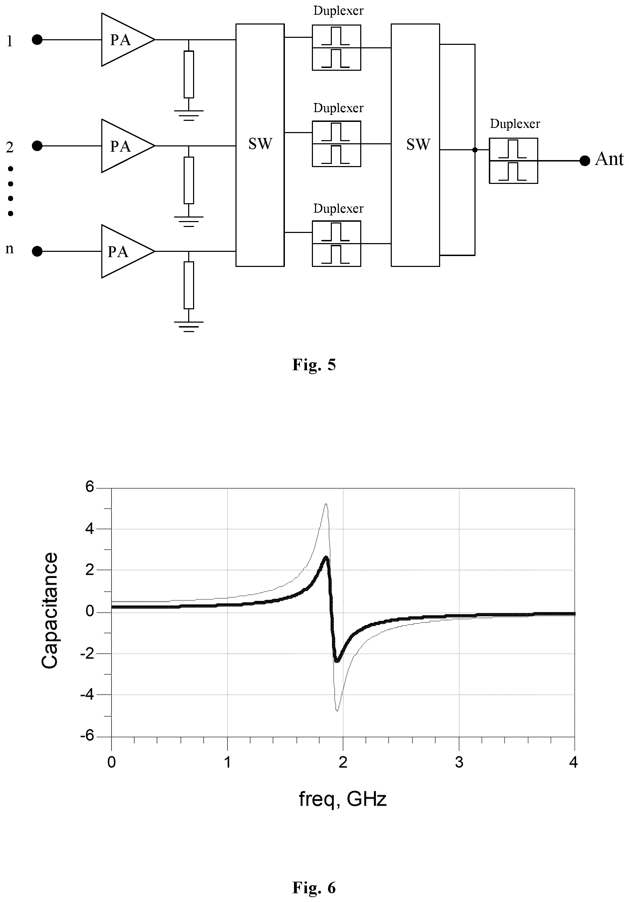

Fig. 5 shows an n-channel transmitter radio frequency front end structure in embodiment 5 of the present disclosure. As shown in Fig. 5, the n-channel transmitter radio frequency front end structure includes:
n power amplifiers (PA), n groups of radio frequency duplexers (Duplexer), a resonant network (SW) and an antenna terminal (Ant), wherein each group of radio frequency duplexers (Duplexer) is connected between each power amplifier (PA) and the antenna terminal (Ant), the resonant network (SW) comprises two groups of series resonant networks, one of the two groups of series resonant networks is connected between two power amplifiers (PA) and the radio frequency duplexer (Duplexer), and the other of the two groups of series resonant networks is connected between the radio frequency duplexer (Duplexer) and the antenna terminal (Ant), a grounding resistor is led out between each power amplifier (PA) and the series resonant network, wherein n is greater than or equal to 2.

It should be noted that the n-channel transmitter radio frequency front end structure has multiple receiving and transmitting paths and switches, and only the transmitting path is shown in Fig. 5.

According to the dual-channel and n-channel transmitter radio frequency front end structures in the above-mentioned embodiments, when a certain radio frequency channel of the power amplifier transmits power, a radio frequency signal is transferred to the radio frequency duplexer by a certain radio frequency channel and then is transmitted by the antenna, while weak radio frequency signals leaking to other radio frequency channels are absorbed by the resonant network that is conducted to the ground, so that the isolation between channels can be effectively improved. At this time, the two input terminals, that is, the antenna terminal and the radio frequency duplexer, need matching inductance due to the introduction of parasitic capacitance. By adopting the resonant network of the present disclosure, the parasitic capacitance can also be canceled, thereby eliminating additional matching inductance. Therefore, when the radio frequency signal of a certain channel of the multi-channel power amplifier leaks to another channel, it can flow to the ground through the low impedance generated by the resonant network at a specific frequency, thereby improving the suppression effect of signal leakage and improving the isolation.

### Embodiment 6

The present disclosure further provides a multi-channel terminal, including:
a baseband unit, configured to process a received I/Q signal and provide the I/Q signal for a transmitting path, wherein the baseband unit supports GSM, TD-SCDMA, FDD-LTE and TDD-LTE systems; and
a radio frequency unit, including a multi-channel transmitter radio frequency front end structure, and configured to support the reception and transmission of radio frequency signals in various frequency bands of GSM, TD-SCDMA, FDD-LTE and TDD-LTE systems.

The radio frequency unit specifically includes:
a radio frequency transceiver chip, configured to support the reception and transmission of radio frequency signals in various frequency bands of GSM, TD-SCDMA and LTE systems;
a power amplifier (PA), configured to amplify GSM radio frequency signals, TD-SCDMA radio frequency signals, FDD-LTE radio frequency signals and TDD-LTE radio frequency signals;
a resonant network (SW), configured to guide leakage signals of the power amplifier (PA) to the ground at specific frequency; and
a radio frequency duplexer (Duplexer), configured to isolate transmitting paths and receiving paths of various frequency bands of the GSM radio frequency signals, the TD-SCDMA radio frequency signals, the FDD-LTE radio frequency signals and the TDD-LTE radio frequency signals.

Fig. 6 shows a characteristic curve of the resonant network in the dual-channel transmitter radio frequency front-end structure. As shown in Fig. 6, the product of an inductance value and a capacitance value of the resonant network is kept unchanged, that is, the frequency of the resonator is kept unchanged, and the magnitudes of the inductance value and the capacitance value are changed to correspond to the capacitance values on the left side and the right side of the resonant frequency. The thick line indicates greater capacitance and smaller inductance, and the thin line indicates smaller capacitance and greater inductance. It can be seen from the figure that for the right side, the more the capacitance is, the greater the absolute value of the generated negative capacitance is, and the more obvious the elimination effect of the random capacitance is, but for the left side, the greater the absolute value of the positive capacitance is. Therefore, for the dual-channel structure, the resonant frequency in an LC network of a high-frequency PA channel is located at low frequency, and the greater the capacitance value is, the better the capacitance elimination effect for the high-frequency channel is, so the capacitance value is greater. When the value of the negative capacitance completely cancels the parasitic capacitance, the matching inductance of the filter can be canceled; and the resonant frequency in the LC resonant network of a low-frequency PA channel is located at high frequency, and the smaller the capacitance value is, the smaller the impact on the low-frequency channel is, therefore, the capacitance value is smaller.

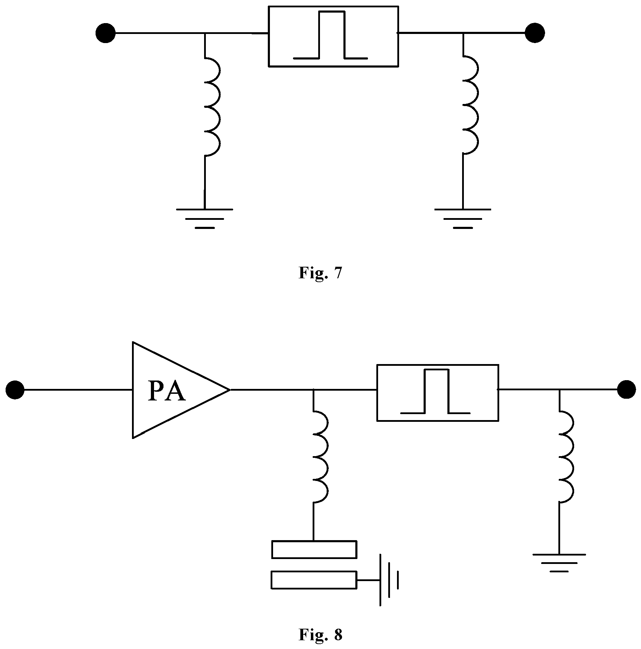

Fig. 7 shows a filter matching method in the prior art. As shown in Fig. 7, the filter matching method in the prior art is to connect grounding inductors in parallel on the both sides of the radio frequency duplexer (Duplexer). As shown in Fig. 8, the filter matching method in embodiment 1 of the present disclosure is to connect the power amplifier (PA) in series at a signal receiving end, and replace the grounding inductor between the power amplifier (PA) and the radio frequency duplexer (Duplexer) with an inductor and a grounding capacitor, which are connected in series, so as to form the resonant network. The added passive resonant network can act as a matching part without adding off-chip components.

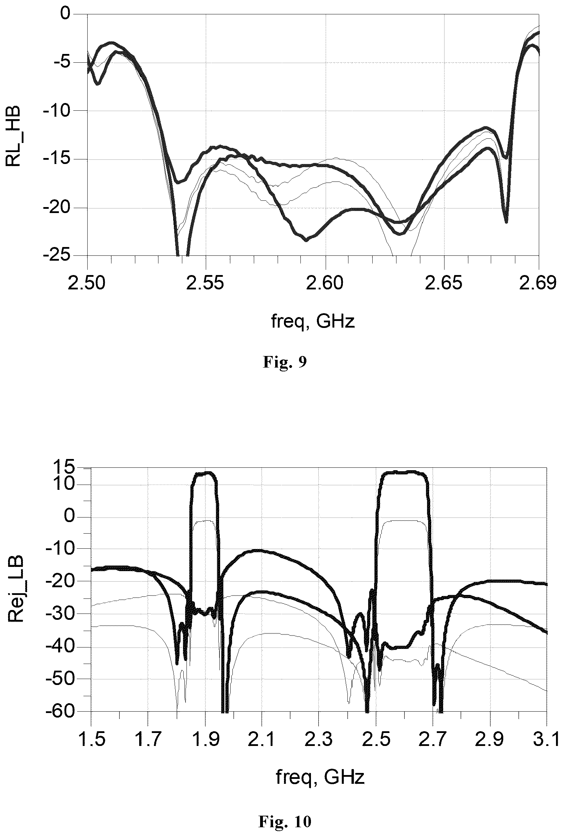

Fig. 9 shows characteristic curves of the filter matching method in the prior art and embodiment 1 of the present disclosure. As shown in Fig. 9, the thin line indicates the matching result (FIG. 7) of parallel inductance in the prior art of Fig. 7, and the thick line indicates the matching effect (FIG. 8) of the structure in Fig. 8 of the present disclosure. The LC structure of the present disclosure replaces the matching of the original parallel inductance, and the matching effect is similar. Therefore, the LC structure of the present disclosure can not only reduce mutual coupling and signal interference, but also can replace the original matching inductors, and there is no increase in passive devices.

Fig. 10 shows filter transmission curves of a Duplexer+PA structure of B39+41N and the LC structure of the present disclosure. The PA gains of B39 and B41N are both 15dB.

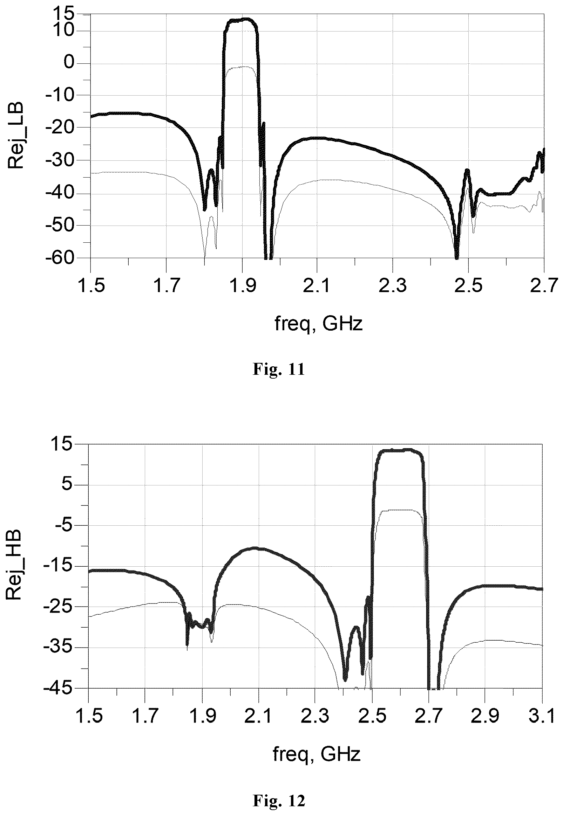

Fig. 11 shows filter transmission curves of the Duplexer+PA structure of B39 N and the LC structure of the present disclosure; and Fig. 12 shows filter transmission curves of the Duplexer+PA structure of B41 N and the LC structure of the present disclosure. It can be seen from Figs. 11-12 that the thin line indicates the transmission curve of a single filter, and the thick line indicates an overall effect after PA is added. The curve rises up as a whole, but the suppression in the vicinity of 2.6 GHz in Fig. 11 and in the vicinity of 1.9 GHz in Fig. 12 is not improved accordingly, so the suppression is improved compared with the previous one.

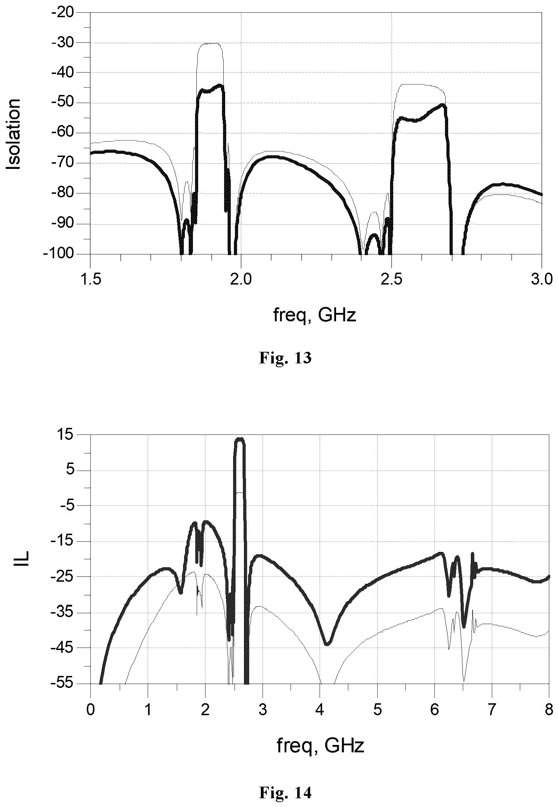

Fig. 13 shows two-channel isolation curves of the Duplexer+PA structure of B39 +41N and the LC structure of the present disclosure. It can be seen from Fig. 13 that the thin line indicates the isolation effect of the Duplexer+PA structure of B39+41N, the thick line indicates the two-channel isolation effect of the LC structure of the present disclosure, the isolation refers to the mutual signal leakage of the two channels, and the isolation of the thick line is better than the isolation of the thin line. Compared with the prior art, the two-channel isolation of the LC structure of the present disclosure is improved by 10-15dB.

Fig. 14 shows suppression curves of setting the resonant frequency of the Duplexer+PA structure of B39 +41N and the LC structure of the present disclosure to a GPS frequency band to improve specific frequency. It can be seen from Fig. 14 that the thin line indicates a suppression effect curve of the Duplexer+PA structure of B39 +41N in the GPS frequency band, and the thick line indicates the suppression effect curve of the LC structure of the present disclosure in the GPS frequency band, the position of suppression improvement can be adjusted arbitrarily, for example, if the GPS frequency band needs better suppression, it can also be achieved through this structure, and the suppression improvements in other frequency bands can also be achieved. Compared with the prior art, the two-channel isolation of the LC structure of the present disclosure is improved by more than 15dB.

In the several embodiments provided by the present disclosure, it should be understood that the disclosed system and method can be implemented in other manners. For example, the device embodiments described above are merely exemplary, e.g., the division of the units is only a logic function division, other division manners can exist during practical implementation, for example, a plurality of units or components can be combined or integrated into another system, or some features can be omitted or not implemented. From another point of view, the displayed or discussed mutual coupling or direct coupling or communication connection can be indirect coupling or communication connection between devices or units through some interfaces, and can be in electrical, mechanical or other forms. The units described as separate components can be separated physically or not, components displayed as units can be physical units or not, namely, can be located in one place, or can be distributed on a plurality of network units. A part of or all of the units can be selected to implement the purposes of the technical solutions in the embodiments according to actual demands.

In addition, the functional units in the various embodiments of the present disclosure can be integrated into one processing unit, or the units singly exist physically, or two or more units are integrated into one unit.

Although the present disclosure has been described in detail with reference to the drawings and in conjunction with the preferred embodiments, the present disclosure is not limited thereto. Without departing from the spirit and essence of the present disclosure, those of ordinary skill in the art can make various equivalent modifications or substitutions to the embodiments of the present disclosure, and these modifications or substitutions shall fall within the scope of the present disclosure, or, modifications or substitutions that can be easily conceived by any skilled familiar with this art within the technical scope disclosed by the present disclosure shall all fall within the protection scope of the present disclosure. Therefore, the protection scope of the present disclosure shall be subject to the protection scope of the claims.

## Claims

1. A multi-channel transmitter radio frequency front end structure, comprising:
two power amplifiers, a radio frequency duplexer, a resonant network and an antenna terminal, wherein the radio frequency duplexer is connected between the two power amplifiers and the antenna terminal, the resonant network is a series resonant network and is connected between the two power amplifiers and the antenna terminal, and the equivalent circuit of the series resonant network is that a grounding capacitor connected in series between two inductors.

2. The multi-channel transmitter radio frequency front end structure according to claim 1, wherein the series resonant network is connected between the two power amplifiers and the radio frequency duplexer.

3. The multi-channel transmitter radio frequency front end structure according to claim 1, wherein the series resonance network is connected between the radio frequency duplexer and the antenna terminal.

4. The multi-channel transmitter radio frequency front end structure according to claim 1, wherein one group of the series resonant networks is connected between the two power amplifiers and the radio frequency duplexer, and the other group of the series resonant networks is connected between the radio frequency duplexer and the antenna terminal.

5. A multi-channel transmitter radio frequency front end structure, comprising:
two power amplifiers, a radio frequency duplexer, a resonant network and an antenna terminal, wherein the radio frequency duplexer is connected between the two power amplifiers and the antenna terminal, the resonant network is a parallel resonant network and is connected in series between the two power amplifiers and the radio frequency duplexer, and the equivalent circuit of the parallel resonant network is that a capacitor is connected in parallel with an inductor.

6. The multi-channel transmitter radio frequency front end structure according to claim 1 or 2, wherein the radio frequency duplexer comprises two groups of parallel filters, the filter comprises four series resonators and three parallel resonators, and the two ends of the parallel resonator are respectively connected in parallel between the connection point group of two series resonators and a ground terminal.

7. A multi-channel terminal comprising the multi-channel transmitter radio frequency front end structure according to any one of claims 1-6, comprising:
a baseband unit, configured to process a received I/Q signal and provide the I/Q signal for a transmitting path, wherein the baseband unit supports GSM, TD-SCDMA, FDD-LTE and TDD-LTE systems; and
a radio frequency unit, comprising a multi-channel transmitter radio frequency front end structure, and configured to support the reception and transmission of radio frequency signals in various frequency bands of GSM, TD-SCDMA, FDD-LTE and TDD-LTE systems.

8. Wireless communication equipment, comprising the multi-channel transmitter radio frequency front end structure according to any one of claims 1-7.
